# EUROPÄISCHE PATENTSCHRIFT

(11) **EP 1 456 814 B1**
(45) Veröffentlichungstag und Bekanntmachung des Hinweises auf die Patenterteilung: **19.01.2011**
(21) Anmeldenummer: 02790423.4
(22) Anmeldetag: 22.11.2002
(51) Int. Cl.: G06K 19/12

(54) **FLÄCHIGES BOGENMATERIAL MIT EINER AKTIVIERBAREN BESCHICHTUNG**
PLANAR SHEET MATERIAL WITH AN ACTIVATING COATING
MATERIAU PLAN POUR LA FORMATION DE FEUILLES

(30) Priorität: 28.11.2001 DE 10158403
(43) Veröffentlichungstag der Anmeldung: 15.09.2004
(73) Patentinhaber: Bossert, Wolfgang, 71735 Eberdingen-Nussdorf (DE)
(72) Erfinder: Bossert, Wolfgang, 71735 Eberdingen-Nussdorf (DE)
(74) Vertreter: Riedel, Peter
(86) Internationale Anmeldenummer: PCT/EP2002/013108
(87) Internationale Veröffentlichungsnummer: WO 2003/045708

(56) Entgegenhaltungen:
- EP-A- 0 980 763
- WO-A-98/56596
- DE-A- 2 421 469
- DE-A- 2 754 908
- DE-A- 19 708 543
- DE-U- 29 909 561
- US-A- 4 387 112

## Beschreibung

Die Erfindung betrifft ein flächiges Bogenmaterial zur Herstellung blattförmiger Bogen zur Aufnahme einer Information.

Blattförmige Bogen aus Papier oder Folie werden zur Aufnahme von Informationen mit Buchstaben, Ziffern, Graphiken, Barcodes und beliebig anderen lesbaren Elementen beschrieben. Beim maschinellen Bedrucken kommt der sogenannten Individualisierung zunehmende Bedeutung zu, demnach einzelne Bögen oder eine Gruppe von Bögen zumindest teilweise individuell bedruckt sind. Beispielsweise ist aus dem Werbebereich bekannt, eine Werbebroschüre durch gezieltes Eindrucken eines Kundennamen an entsprechender Stelle zu individualisieren und damit diesem speziellen Kunden zuzuordnen. Das Anwendungsspektrum von durch derart aufgedruckte Namen individualisierten Bögen ist begrenzt.

Aus der DE 197 08 543 A1 ist ein Sicherheitserzeugnis am Beispiel einer Banknote bekannt. Dort sind elektrolumineszierende Pigmente in Mikrokapseln gehalten, die beim Anlegen eines elektromagnetischen Feldes in Form eines Laserstrahls aufleuchten. Die elektrolumineszierenden Pigmente in Zeichenform, also beispielsweise als Sternenkranz des Europa-Symbols oder als Ziffer erlaubt zwar eine Echtheitsprüfung. Dazu müssen jedoch die jeweiligen individuellen Erzeugnisse das gleiche aufgedruckte Muster aufweisen, damit immer das gleiche Muster als Echtheitsnachweis erkannt werden kann. Eine Individualisierung ist dadurch nicht vorgesehen. Sinngemäß das Gleiche gilt auch für das Wert- und Sicherheitsdokument nach der EP 0 980 763 A1, bei dem optisch anregbare Farbstoffe zur Echtheitsprüfung vorgesehen sind.

Der Erfindung liegt die Aufgabe zugrunde, den Informationsgehalt eines Bogens flexibler zu gestalten.

Dazu ist vorgesehen, das Bogenmaterial mit einer flächigen aktivierbaren Beschichtung zu versehen, wobei in der Beschichtung feine Hohlräume und in den Hohlräumen festgelegte magnetisierbare Partikel eingebettet sind. Dabei können die Hohlräume von kristalliner Struktur und insbesondere als Mikrokapseln ausgebildet sein. Durch gezielte Aktivierung der Hohlräume bzw. der magnetischen Partikel ist eine Individualisierung des Bogens vorgesehen. Durch die flächige Beschichtung des Bogenmaterials mit feinen Hohlräumen und magnetisierbaren Partikeln steht die gesamte Oberfläche eines daraus gefertigten Bogens zur Aufnahme, Wiedergabe und gegebenenfalls Änderung einer individualisierten Information zur Verfügung. Insbesondere in Verbindung mit verschlüsselten und/oder komprimierten Datenformaten ist eine hohe individuelle Datenmenge ablegbar. Aus der Kombination der magnetisierbaren Partikel mit den feinen Hohlräumen in der aktivierbaren Beschichtung ergibt sich abhängig von der Befüllung der feinen Hohlräume eine Vielzahl von Anwendungsmöglichkeiten. Beispielsweise kann eine Vielzahl von Bögen gleichartig in bekannter Weise bedruckt sein, wobei eine individuelle Information auf einem entsprechenden Bogen oder einer Gruppe davon durch entsprechende Magnetisierung der Partikel unsichtbar abgelegt ist. Dabei kommt auch ein Beschreiben nach dem bekannten Durchschreibsatz-Prinzip in Frage, bei dem durch Druck auf die feinen Hohlräume beziehungsweise auf die entsprechenden Mikrokapseln ein Farbbildner freigesetzt wird und in Verbindung mit einem Farbentwickler einen sichtbaren Schriftzug erzeugt.

In einer zweckmäßigen Weiterbildung enthalten die feinen Hohlräume einen elektrisch leitfähigen Inhalt. Beim Zerplatzen beispielsweise der Mikrokapseln wird dieser Inhalt freigesetzt und erzeugt entsprechend dem Beschreibungsmuster elektrisch leitfähige Bahnen. Insbesondere in Verbindung mit den magnetisierbaren Partikeln lassen sich durch Chip-ähnliche Strukturen zur Speicherung und Verarbeitung individueller Daten auf drucktechnischem Wege herstellen. Durch die vollflächige Beschichtung des Bogenmaterials kann dabei die gesamte Oberfläche des Bogens zur Herstellung einer derartigen Struktur genutzt werden.

Bei einer Auswahl von magnetisierbaren Partikeln mit elektrischen Leiteigenschaften ergeben sich mehrere Möglichkeiten zur Herstellung elektrisch leitfähiger Bahnen. Beispielsweise können die magnetisierbaren Partikel in der Beschichtung zwischen den Hohlräumen angeordnet sein. Beim Zerplatzen der Hohlräume und Freigabe eines elektrisch leitfähigen Materials werden leitfähige Verbindungen hergestellt. In einer zweckmäßigen Alternative sind die magnetisierbaren Partikel innerhalb der Mikrokapseln angeordnet und durch deren Wände elektrisch isoliert. Erst durch Zerstörung der Kapselwände wird eine elektrische Leitfähigkeit hergestellt. Die isolierende Wirkung der Kapselwand trägt zu einer deutlichen Trennschärfe zwischen den beiden Zuständen "elektrisch leitend" und "elektrisch isoliert" bei. Darüber hinaus haben die Kapselwände auch eine korrosionsschützende Wirkung auf die magnetisierbaren Partikel.

In einer vorteilhaften Ausbildung ist der Bogen durch Aktivierung der Beschichtung derart individualisiert, daß die Beschichtung ein Sicherheitsmerkmal enthält. Dieses Sicherheitsmerkmal kann beispielsweise ein elektrisches und/oder magnetisches Wasserzeichen sein. Dabei ist der Bogen als gewöhnliches Schreibpapier verwendbar, wobei die Beschriftungsqualität durch das optisch nicht erkennbare Wasserzeichen nicht oder nur unwesentlich beeinträchtigt ist. Mit einem entsprechenden insbesondere kontaktlos arbeitenden Lesegerät kann das Wasserzeichen erkannt und damit die Echtheit des Bogens bzw. eines Schriftsatzes geprüft werden. Beispielsweise können Firmen, Ämter, einzelne Abteilungen davon oder auch Privatpersonen durch das genannte Wasserzeichen individualisierte Bögen auf Vorrat halten. Schriftsätze lassen sich anhand des individuellen Wasserzeichens eindeutig der entsprechenden Person, Abteilung oder Firma zuordnen. Dabei werden die entsprechenden Bögen aus dem gleichen Grundmaterial mit einer einheitlichen aktivierbaren Beschichtung gefertigt. Die Individualisierung durch ein elektronisches und/oder magnetisches Wasserzeichen erfolgt erst nach Herstellung des Papiers durch entsprechende Aktivierung der Beschichtung hinsichtlich seiner Mikrokapseln, der magnetisierbaren Partikel oder in Kombination davon. Durch die Individualisierung erst im Anschluß an die Bogenmaterialherstellung kann das Bogenmaterial unter Großserienbedingungen ohne weiteres gefertigt werden. Dennoch ist eine Individualisierung mittels Wasserzeichen ohne weiteres auch für sehr kleine Individualisierungseinheiten möglich.

In einer zweckmäßigen Alternative enthält das Sicherheitsmerkmal Informationen zu einem Paßwort. Diese Informationen können das Paßwort selbst beispielsweise in verschlüsselter Form oder auch nur einen Schlüssel zur Entschlüsselung eines extern eingegebenen Paßwortes sein. Als Paßwort kommt beispielsweise eine individuell vergebene PIN-Nummer in Frage. Dadurch lassen sich beispielsweise auf drucktechnischem Wege aus universell vorgefertigtem Bogenmaterial persönlich individualisierte Karten herstellen. Dies können sowohl Kundenkarten von Kaufhausketten sein, als auch Krankenkassen-Karten mit einer Vielzahl bezüglich der Person des Karteninhabers individualisierter Informationen. Zweckmäßig ist dazu ein Bogen im Standardformat, beispielsweise DIN A4 Format vorgesehen, wobei der Bogen ein Teilfeld mit der genannten individuellen Karte enthält. Der Bogen selbst ist beliebig in Klarschrift bedruckbar, beispielsweise mit Werbematerial oder Anweisungen zur Nutzung der Karte. Diese können allgemein gehalten sein, während die Individualisierung lediglich in nicht sichtbarer Form durch magnetische und/oder elektrische Speicherung erfolgt. Ein weiterer Grad der Individualisierung läßt sich beispielsweise durch eine entsprechende elektronische Struktur in der aktivierbaren Schicht derart erzielen, daß beispielsweise der Inhaber einer Karte auf dem Bogen in Klarschrift sein eigenes Paßwort oder eine andere gewünschte Identifikation einträgt und diese dann über die genannte Struktur in verschlüsselter Form auf die Karte übertragen wird. Dadurch kann der Inhaber selbst zur Individualisierung beitragen.

Das Auslesen des Paßworts kann beispielsweise im Zusammenhang mit Krankenkassenkarten derart vorgesehen sein, daß ein Zugriff auf eine Datenbank nur durch gemeinsame Autorisierung durch den Patienten und den Arzt mit entsprechender Eingabe eines Paßworts und Abgleich mit der Krankenkassenkarte ermöglicht ist. Dadurch ist unbefugter Zugriff auf vertrauliche Patientendaten vermeidbar. In Zusammenhang mit Kundenkarten und insbesondere bei der Ausbildung entsprechender Karten auf dem erfindungsgemäßen Bogenmaterial zur Nutzung als Zahlungsmittel ergeben sich über die reine Zahlungsfunktion hinaus zusätzliche Möglichkeiten. Beispielsweise kann nach entsprechender Abfrage der PIN-Nummer bzw. anderer Paßwörter die Echtheit der Karte, das zur Verfügung stehende Guthaben beispielsweise über das Internet erfolgen. Ein zwischengeschaltetes sogenanntes "Trust-Center" kann dabei die Vertraulichkeit der Überprüfung sicherstellen.

In einer weiteren vorteilhaften Ausbildung ist der Bogen zu einem Etikett einer Ware verarbeitet, wobei ein individuelles Sicherheitsmerkmal Echtheitsinformationen der entsprechenden Ware enthält. Die entsprechenden Etiketten sind bezüglich der Ware oder dessen Hersteller individualisiert. Über entsprechende kontaktlose Lesegeräte kann diese Sicherheitsinformation ausgelesen werden und damit die Echtheit des Etikettes bzw. der entsprechenden Ware geprüft werden. Insbesondere die magnetisch gespeicherte Sicherheitsinformation läßt sich über entsprechende Lesegeräte auch über größere Entfernungen auslesen. Dadurch sind Waren mit entsprechenden Etiketten auch bei einer Verpackung in größeren Gebinden als Gesamtheit auf ihre Echtheit überprüfbar. Beispielsweise im Zusammenhang mit Grenz- und Zollkontrollen sind dadurch Möglichkeiten zur Bekämpfung von Produkt- und Warenpiraterie gegeben. Entsprechende Etiketten können bei geeigneter Auswahl des Trägermaterials auch im textilen Bereich eingesetzt werden. Die Einbettung der magnetischen Partikel in Mikrokapseln schützt vor Korrosion beim Waschvorgang.

Die Individualisierung einzelner Blätter oder eines Satzes folgt nach dem Herstellprozeß des Bogenmaterials. Die gesamte Fläche des Bogenmaterials steht dabei zur Aufnahme individueller Merkmale zur Verfügung. Abhängig von der Befüllung der feinen Hohlräume und deren Aktivierung können die individuellen Merkmale optisch sichtbar oder auch unsichtbar nur zur elektronischen bzw. magnetischen Auslesung auf dem Bogen aufgebracht sein. Neben der reinen Magnetisierung der magnetisierbaren Partikel kommt zur Speicherung der individuellen Information auch das Zerstören und damit die Freigabe des Inhaltes zur Aufnahme in Betracht. Das Aufplatzen der Mikrokapseln kann durch mechanischen Druck beispielsweise mit einem Nadeldrucker oder durch Erhitzen entsprechend dem bekannten Thermodruckprinzip erfolgen. Fest in die Mikrokapseln eingebettete Partikel können durch ein elektrisches oder magnetisches Feld bzw. in ihrer Orientierung verändert werden, wodurch ein Aufreißen der Kapselhülle bewirkt wird.

Ausführungsbeispiele der Erfindung werden im folgenden anhand der Zeichnung näher erläutert. Es zeigen:
- Fig. 1: eine schematische Querschnittsdarstellung eines mit einer aktivierbaren Beschichtung versehenen Bogenmaterials;
- Fig. 2: eine Variante des Bogenmaterials nach Fig. 1 mit magnetisierbaren Partikeln in der Beschichtung außerhalb von Mikrokapseln;
- Fig. 3: eine schematische Ansicht eines individualisier- ten Bogens mit einer ausgestanzten Kundenkarte und verschiedenen individuellen Sicherheitsmerk- malen;
- Fig. 4: einen Prinzipdarstellung einer Mikrokapsel mit einem elektrisch leitfähigen Inhalt und einem magnetisierten Partikel;
- Fig. 5: die Anordnung nach Fig. 4 unter Einwirkung eines Magnetfeldes mit aufgerissener Kapselwand;
- Fig. 6: eine schematische Darstellung einer Medikamenten- flasche mit einem durch ein Sicherheitsmerkmal individualisierten Etikett.

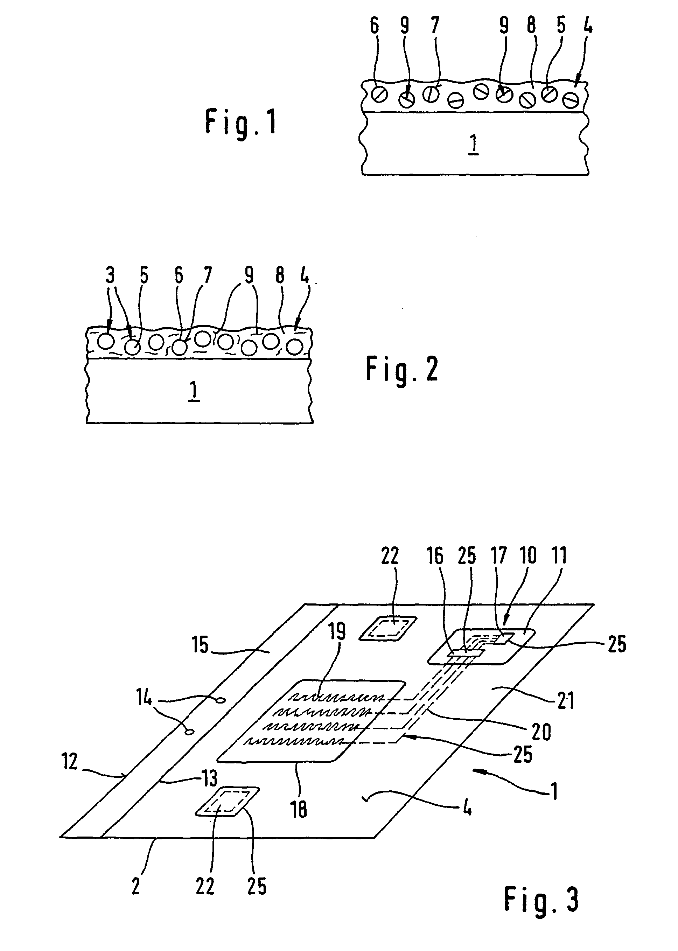

Fig. 1 zeigt in einer schematischen Darstellung einen Querschnitt durch einen Papierbogen 1, der mit einer aktivierbaren Beschichtung 4 versehen ist. Die Beschichtung 4 umfaßt ein Bindemittel 8, in dem Mikrokapseln 6 eingelagert sind. Die Mikrokapseln 6 beinhalten fest eingelagerte magnetisierbare Partikel 9 sowie ein weiteres elektrisch leitfähiges Material. Auch die magnetisierbaren Partikel 9 sind elektrisch leitfähig. Der elektrisch leitfähige Inhalt der Mikrokapseln 6 ist durch Zellwände 7 der Mikrokapseln 6 elektrisch isoliert. Der Bogen 1 kann mit einer individuellen Information versehen werden, indem die ursprünglich unmagnetisierten Partikel 9 gezielt magnetisiert werden. Durch Zerplatzen der Mikrokapseln 6 tritt das leitfähige Material 5 aus, wodurch leitfähige Verbindungen zwischen den einzelnen magnetisierbaren Partikeln 9 hergestellt werden können. Dadurch ist neben einer reinen Informationsspeicherung individueller Daten auch eine logische Verknüpfung solcher Daten durch Bildung leitfähiger, Chip-ähnlicher Strukturen ermöglicht.

Fig. 2 zeigt eine Variante der Anordnung nach Fig. 1, bei dem die Mikrokapseln 6 ein leitfähiges Material 5 enthalten. Die magnetisierbaren Partikel 9 sind im Bindemittel 8 der Beschichtung 4 zwischen den Mikrokapseln 6 angeordnet. Anstelle des leitfähigen Materials 5 oder in Kombination dazu kann auch ein Farbbildner in Mikrokapseln 6 vorgesehen sein. Feine Hohlräume 3, die in den gezeigten Ausführungsbeispielen durch die Mikrokapseln 6 gebildet sind, können bedarfsweise auch durch eine kristalline Struktur der Beschichtung 4 oder auf ähnliche Weise erzeugt werden.

Fig. 3 zeigt in einer schematischen Übersichtsdarstellung einen Bogen 1 aus einem Bogenmaterial 2 entsprechend Fig. 1. Der Bogen 1 ist durch eine Linie 13 parallel zu einer Kante 12 in einen Heftbereich 15 und einen Informationsträgerbereich 21 aufgeteilt. Der Heftbereich 15 weist eine Lochung 14 zum Abheften des Bogens 1 auf. Im Informationsträgerbereich 21 ist ein Teilfeld 10 mit einer zumindest teilweise ausgestanzten Kundenkarte 11 vorgesehen. Die Kundenkarte 11 kann eine Ausweiskarte, eine Kreditkarte, eine Patientenkarte, eine Telefonkarte oder eine beliebige andere Karte mit individuellen Daten sein. Der Bogen 1 ist durch gezielte Aktivierung der Beschichtung 4 in Form von verschiedenen Sicherheitsmerkmalen 25 individualisiert. Einige optisch nicht erkennbare und durch ein entsprechendes Lesegerät kontaktlos erfaßbare magnetische Wasserzeichen 22 stellen ein Sicherheitsmerkmal 25 dar, mit dem beispielsweise eine beschränkte Menge von Bogen 1 bezüglich eines Ausgabedatums, einer ausgebenden Firma oder eines ausgebenden Amtes individuell kenntlich gemacht werden können. Weitere Sicherheitsmerkmale 25 sind für eine Individualisierung hinsichtlich beispielsweise einer Empfängerperson vorgesehen, im gezeigten Beispiel also der Inhaber der Kundenkarte 11. Ein Schriftfeld 18 ist beliebig mit einer angedeuteten Schrift 19 beschreibbar. Die Kundenkarte 11 weist als individualisierende Sicherheitsmerkmale 25 einen optisch nicht sichtbaren, magnetisch lesbaren kodierten Bereich 16 und einen optisch lesbaren Klarschriftbereich 17 auf. Der kodierte Bereich 16 enthält verschlüsselte Informationen zu einem Paßwort. Der Klarschriftbereich 17 kann den Namen des Karteninhabers und/oder sein Paßfoto beinhalten. Als weitere Sicherheitsmerkmale 25 sind Leiterbahnen 20 vorgesehen, die die Sicherheitsmerkmale 25 der Kundenkarte 11 mit dem Schriftfeld 18 bzw. dessen Schrift 19 verbinden. Die Leiterbahnen 20 können optisch nicht erkennbar ohne Beeinträchtigung der visuell erkennbaren Beschreibbarkeit durch das leitfähige Material 5 bzw. die leitfähig magnetisierbaren Partikel 9 (Fig. 1, 2) hergestellt bzw. individuell angepaßt werden. Dadurch ist ein Datenaustausch zwischen dem Schriftfeld 8 und dem kodierten Bereich 16 bzw. dem Klarschriftbereich 17 der Kundenkarte 11 ermöglicht.

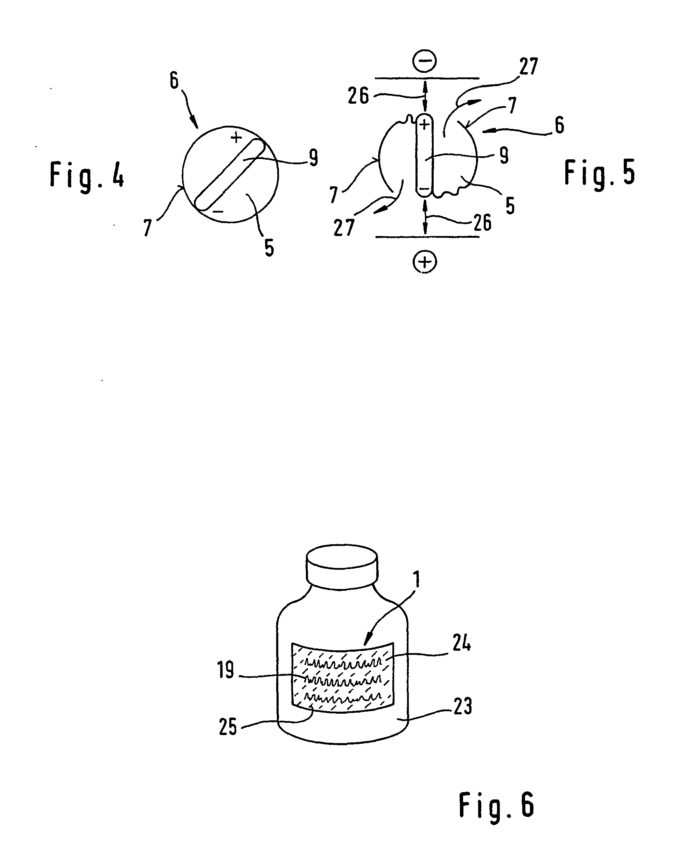

Fig. 4 zeigt schematisch eine Mikrokapsel 6, die mit einem leitfähigen Material 5 und einem magnetisierbaren Partikel 9 gefüllt ist. Auch der magnetisierbare Partikel 9 ist elektrisch leitfähig, wobei dieser zusammen mit dem leitfähigen Material 5 durch eine Zellwand 7 der Mikrokapsel 6 elektrisch isoliert ist. Das Partikel 9 ist in der Zellwand 7 fest eingelagert und im Rohzustand unmagnetisiert. Zur Individualisierung eines Bogens 1 (Fig. 3) mittels Freigabe des Inhaltes der Mikrokapsel 6 wird zunächst punktuell eine schematisch angedeutete Magnetisierung der Partikel 9 vorgenommen.

Anschließend wird entsprechend Fig. 5 ein magnetisches Feld 26 aufgebracht, was zu einer Ausrichtung der magnetisierten Partikel 9 in Richtung des Magnetfeldes 26 führt. Durch die feste Verbindung der Partikel 9 mit der Zellwand 7 reißt diese auf, in dessen Folge das leitfähige Material 5 entlang der Pfeile 27 aus den Mikrokapseln 6 entweichen kann. Auf diese Weise können beispielsweise Leiterbahnen 20 entsprechend Fig. 3 hergestellt werden. Anstelle der gezeigten magnetischen Ausrichtung der magnetisierbaren Partikel 9 kann auch eine Ausrichtung durch ein elektrisches Feld oder eine Öffnung der Mikrokapsel 6 auf thermischem Wege vorgesehen sein.

Fig. 6 zeigt ein weiteres Anwendungsbeispiel einen Bogens 1, der zum Etikett 24 einer Ware verarbeitet ist. Die Ware ist am Beispiel einer Medikamentenflasche 23 dargestellt. Das Etikett 24 weist eine gewöhnliche Beschriftung 19 im Klartext auf. Der Bogen 1 ist entsprechend Fig. 1 ausgebildet, wobei in der Beschichtung 4 ein optisch nicht erkennbares, magnetisch auslesbares Sicherheitsmerkmal 25 mit Echtheitsinformationen zur Medikamentenflasche 23 angebracht ist. Dabei kann die Individualisierung hinsichtlich Herstellort, Herstelldatum oder anderer relevanter Informationen zur Bestimmung der Echtheit der Ware erfolgen.

## Patentansprüche

1. Flächiges Bogenmaterial zur Herstellung blattförmiger Bogen (1) zur Aufnahme einer Information,
**dadurch gekennzeichnet, daß** das Bogenmaterial (2) eine flächige aktivierbare Beschichtung (4) mit eingebetteten feinen Hohlräumen (3) und in den Hohlräumen (3) festgelegten magnetisierbaren Partikeln (9) aufweist, wobei die gesamte Oberfläche des aus dem Bogenmaterial (2) gefertigten Bogens (1) durch gezielte Aktivierung der Hohlräume (3) beziehungsweise der Partikel (9) individualisierbar ist.

2. Bogenmaterial nach Anspruch 1, **dadurch gekennzeichnet, daß** die Hohlräume (3) Mikrokapseln (6) sind.

3. Bogenmaterial nach Anspruch 1 oder 2,
**dadurch gekennzeichnet, daß** der Inhalt der Hohlräume (3) elektrisch leitfähig und in den Hohlräumen (3) elektrisch isoliert gelagert ist.

4. Bogenmaterial nach einem der Ansprüche 1 bis 3,
**dadurch gekennzeichnet, daß** die magnetisierbaren Partikel (9) elektrisch leitfähig sind.

5. Bogenmaterial nach einem der Ansprüche 1 bis 4,
**dadurch gekennzeichnet, daß** der Bogen (1) durch Aktivierung der Beschichtung (4) mit einem Sicherheitsmerkmal individualisiert ist.

6. Bogenmaterial nach Anspruch 5,
**dadurch gekennzeichnet, daß** das Sicherheitsmerkmal ein elektrisches und/oder magnetisches Wasserzeichen ist.

7. Bogenmaterial nach Anspruch 5,
**dadurch gekennzeichnet, daß** das Sicherheitsmerkmal Informationen zu einem Paßwort enthält.

8. Bogenmaterial nach Anspruch 5,
**dadurch gekennzeichnet, daß** der Bogen zu einem Etikett einer Ware verarbeitet ist, wobei das Sicherheitsmerkmal Echtheitsinformationen der Ware enthält.

9. Bogenmaterial nach Anspruch 5 oder 7,
**dadurch gekennzeichnet, daß** der Bogen (1) ein Teilfeld (10) mit einer individuellen Kundenkarte (11) enthält.

## Claims

1. Flat sheet material for the production of leaf-like sheets (1) for accommodating information,
**characterised in that** the sheet material (2) has a flat activatable coating (4) with embedded fine cavities (3) and fixed magnetisable particles (9) in the cavities (3), wherein the entire surface of the sheet (1) produced from the sheet material (2) can be individualised by means of targeted activation of the cavities (3) or of the particles (9).

2. Sheet material according to Claim 1,
**characterised in that** the cavities (3) are microcapsules (6).

3. Sheet material according to Claim 1 or 2,
**characterised in that** the content of the cavities (3) is electrically conductive and mounted in the cavities (3) in an electrically insulated manner.

4. Sheet material according to any one of Claims 1 to 3,
**characterised in that** the magnetisable particles (9) are electrically conductive.

5. Sheet material according to any one of Claims 1 to 4,
**characterised in that** the sheet (1) is individualised by means of activation of the coating (4) with a security feature.

6. Sheet material according to Claim 5,
**characterised in that** the security feature is an electrical and/or magnetic watermark.

7. Sheet material according to Claim 5,
**characterised in that** the security feature contains information about a password.

8. Sheet material according to Claim 5,
**characterised in that** the sheet is processed to form a label of a good, wherein the security feature contains authenticity information of the good.

9. Sheet material according to Claim 5 or 7,
**characterised in that** the sheet (1) contains a subfield (10) with an individual customer card (11).

## Revendications

1. Matériau à feuilles plan pour la fabrication de feuilles (1) en forme de feuillet pour l'enregistrement d'une information,
**caractérisé en ce que** le matériau à feuilles (2) présente un revêtement (4) plan activable avec des cavités (3) fines encastrées et des particules (9) magnétisables fixées dans les cavités (3), l'ensemble de la surface de la feuille (1) fabriquée à partir du matériau à feuilles (2) pouvant être individualisé par activation ciblée des cavités (3) et des particules (9).

2. Matériau à feuilles selon la revendication 1,
**caractérisé en ce que** les cavités (3) sont des microcapsules (6).

3. Matériau à feuilles selon la revendication 1 ou 2,
**caractérisé en ce que** le contenu des cavités (3) est électroconducteur et monté de façon électro-isolée dans les cavités (3).

4. Matériau à feuilles selon l'une quelconque des revendications 1 à 3,
**caractérisé en ce que** les particules (9) magnétisables sont électroconductrices.

5. Matériau à feuilles selon l'une quelconque des revendications 1 à 4,
**caractérisé en ce que** la feuille (1) est individualisée par activation du revêtement (4) avec une caractéristique de sécurité.

6. Matériau à feuilles selon la revendication 5,
**caractérisé en ce que** la caractéristique de sécurité est un filigrane électrique et/ou un filigrane magnétique.

7. Matériau à feuilles selon la revendication 5,
**caractérisé en ce que** la caractéristique de sécurité contient des informations concernant un mot de passe.

8. Matériau à feuilles selon la revendication 5,
**caractérisé en ce que** la feuille est traitée pour obtenir une étiquette d'un article, la caractéristique de sécurité contenant des informations en temps réel sur l'article.

9. Matériau à feuilles selon la revendication 5 ou 7,
**caractérisé en ce que** la feuille (1) contient un champ partiel (10) avec une carte client (11) individuelle.
